# EUROPEAN PATENT SPECIFICATION

(11) **EP 1 699 154 B1**
(45) Date of publication and mention of the grant of the patent: **05.11.2008**
(21) Application number: 03785469.2
(22) Date of filing: 26.12.2003
(51) Int. Cl.: H04J 13/00, H04B 1/707

(54) **Multi-path search method of code-division multiple-access system**
Mehrweggesuchverfahren eines Codemultiplex-Mehrfachzugriffsystem
Procédé de recherche de trajets multiples d'un système avec acces multiple à repartition par code

(43) Date of publication of application: 06.09.2006
(73) Proprietor: ZTE Corporation, Shenzhen 518057 (CN)
(72) Inventor: DING, Jiewei ZTE Plaza, Keji Road South, Shenzhen Guangdong 518057 (CN)
(74) Representative: Wablat, Wolfgang
(86) International application number: PCT/CN2003/001129
(87) International publication number: WO 2005/064833

(56) References cited:
- EP-A- 1 089 452
- EP-A1- 0 274 157
- EP-A2- 0 820 156
- WO-A-03/021806
- CN-A- 1 266 314
- CN-A- 1 321 367

## Description

### TECHNICAL FIELD

The present invention relates to the signal receiving technology in Code-Division Multiple Access (CDMA is used for short) communication system, and particularly, to a method of multi-path searching during the period of receiving a signal. The present invention is applicable for any communication system that applies Code-Division Multiple Access technology.

### BACKGROUND OF THE INVENTION

A method of multi-path searching in code-division multiple access communication system, known from EP-A2-0 820 156, comprises the steps of: calculating correlation with a locally generated spreading code of a received signal; selecting multiple peaks which have comparatively higher energy from said power delay profile; performing threshold comparison and interpolation for said selected peaks to determine multi-path delay position; and determining the multi-path delay according to the results of said interpolation.

Similar methods are known from WO 03/021806 A and EP-A-1 089 452.

Code-Division Multiple Access is a multiple access method based on the spread spectrum technology, which has become another multiple access method applied in communication system in recent years besides frequency-division multiple access (FDMA) and time-division multiple access (TDMA). Compared with frequency-division multiple access and time-division multiple access technologies, CDMA technology has a lot of advantages, such as high utilization rate of frequency spectra, simple to plan and so on. The communication system which applies CDMA technology includes: narrowband CDMA system, i.e. IS-95 system; wideband CDMA system, i.e. WCDMA system; CDMA 2000 system, TD-SCDMA system and TD-CDMA systematic etc.

Above-mentioned communication systems all have adopted multi-code spread spectrum technology, which is also called two-step spreading code design technology. Thus, the spread spectrum process of the reverse link from a mobile station to a base station can be divided into two steps. The first step comprises making spread spectrum for the signal by using the orthogonal function (such as Walsh function, OVSF code etc) named channelization code whose cross-correlation value is zero when the delay is aligned. The first step is called channelization operation. The second step comprises multiplying pseudo-random code (such as PN sequence, M sequence, Gold sequence etc.) uniquely assigned by each mobile station, which has good performance of both auto-correlation and cross-correlation, with signal. The second step is called scrambling operation. And the above-mentioned pseudo-random code is called scrambling code. In the second step, the scrambling code is used to distinguish different mobile station. A value in the scrambling code sequence is also called chip. Also, in these systems, the spread spectrum process of the forward link from base station to mobile station is also divided into the same two steps, wherein the only difference is that in the forward link scrambling code is used to distinguish the base station or cell, and different base station or cell has different scrambling code. The recovering process occurring at the corresponding receiving side is called de-spread process. The product of channelization code and scrambling code is named as spreading code.

In a general mobile communication system, signals between a base station and a mobile station propagate along multiple paths between the transmitter and the receiver. This phenomenon of multi-path transmission mainly results from the signal reflection caused by the objects' surface around the transmitter and receiver. Because the propagation path is different, the propagation delays of the different multi-path components' arriving at the receiver are different, wherein the multi-path components are generated by the same signal propagating along different path., which results in multi-path interference and signal fading.

The receiver in CDMA system is of multi-branches structure, wherein each branch is an individual receiver element. The receiver is used to demodulate the component of the desired received signal and combine the signals of different receiver element, which can improve the quality of the received signal. Each branch is synchronized with the multi-path that has almost the same propagation delay. This kind of receiver is also called Rake receiver, which can add up the multi-path energy of different delay corresponding to the same mobile station according to a certain rule, thus the receiver's performance is improved.

The synchronization of the local spreading code and the spreading code in the received signal is a prerequisite for the CDMA system to realize a normal communication. If code synchronization can't be realized, the de-spread process can't be performed correctly; therefore the original information can't be demodulated correctly. The more accurate the code synchronization is, the better the receiver's demodulation performance is. Multi-path searching includes detecting the propagation delay of multi-path signal from signals received, and then adjusting local spreading code according to the transmission delay to make it synchronize with the spreading code of each multi-path signal of received signals. If the multi-path delay can't be searched accurately by multi-path searching, then the demodulation performance of the followed Rake receiver will suffer a loss.

Multi-path searching methods according to the prior art comprise the following steps: first, performing slide correlation integral of the received signal with the spreading code to obtain the Complex Relation Function (CRF) of the expected user signal; then, the Power Delay Profile (PDP) is obtained by getting the sum of the square of real part and the square of imaginary part of CRF, that is, PDP is the module square of the correlation function of a spreading code and a received signal; And then, peaks having a comparatively larger profile value (i.e. comparatively larger correlation value, comparatively larger power) or having a profile value which is larger than a predetermined threshold are picked out from the power delay profile PDP, wherein the position of the peaks are just the positions of the multi-path delays. Above-mentioned method is the traditional multi-path searching method, which has been described in the following books and papers, "Modern Mobile Communication Systems" (People's Post & Telecomm Press, by Qi Yusheng and Shao Shixiang), "CDMA: Principles of Spread Spectrum Communication" (Addison-WeSley Publishing Company, by Andrew J. Viterbi), "Optimal Decision Strategies for Acquisition of Spread-Spectrum Signals in Frequency-Selective Fading Channels "(IEEE Transactions on communications Vol. 46. No. 5, by Roland R. Rick and Laurence B. Milstein.).

Actually, multi-path searching is just equivalent to making de-spread process for each different delay of received signal by using spreading code to select real multi-path delay. Usually, hundreds of delay positions are needed to be de-spreaded, while only several of them are the real multi-path positions, which is usually less than ten. It's enough for the followed Rake receivers to de-spread only the selected real multi-path positions.

The wireless communication environment changes continuously, so multi-path search needs to be carried out continuously in order to reflect the current channel environment in time. To reduce the time of multi-path search, a parallel searching method is adopted. Therefore in the receiver, the multi-path search takes a great proportion in operation quantity, the realization of which is also complex. If the operation for multi-path searching is reduced, the corresponding multi-path searching precision will be lowered than usual also, and the gap between two adjacent delay points is usually equal to half of chip period, namely, the precision is only 1/2 chip, while the demodulation needs a precision of 1/4 chip or even 1/8 chip. To improve the precision, a method called early-late gate tracking method is usually applied, which comprises the following steps of: first, in every branch of Rake receiver, demodulating the energy of the signal at the position of multi-path delay (called on-time path) and also demodulating that of the signal which is half chip earlier (called early path) than the multi-path delay as well as that of the signal which is half chip later (called late path) than the multi-path delay at the same time; then, comparing these three paths signals, that is, early path signal, late path signal as well as on-time path signal, and sliding 1/8 chip or 1/4 chip of the multi-path delay positions of these three channels in the direction of late path if the signal energy of late path exceeds a predetermined threshold; or, sliding 1/8 chip or 1/4 chip of the multi-path delay positions of these three channels in the direction of early path if the signal energy of early path exceeds a predetermined threshold; or, considering the current multi-path delay position as a relatively correct position and there is no need to slide, if the signal energies of both early path and late path are almost equal. This process is called early-late gate tracking. This method makes further fine adjustment for the searched result, which functions like a searcher with a smaller searching window (only have three delay positions) substantially. Although the receiver's demodulation performance can be improved greatly by using the early-late gate tracking method, it makes the complexity of the Rake receiver doubled at the same time. In addition, in multi-path assignment method, the multi-path search result and early-late gate tracking result usually need to be synthesized, and the appropriate one of them should be chosen and assigned to the Rake receiver in order to assign a relatively accurate delay position when carrying out the multi-path assignment. Also, the method of early-late gate tracking has increased the complexity of multi-path assignment management. The method of early-late gate tracking has already been described in detail in the following book "CDMA: Principles of Spread Spectrum Communication" (Addison-WeSley Publishing Company, by Andrew J. Viterbi).

To sum up, multi-path searching method according to the prior art can only offer a search with relatively low precision. To improve the precision, the method of early-late gate tracking is applied, but it is complicated.

### SUMMARY OF THE INVENTION

Therefore, an object of the present invention is to provide a multi-path searching method applied in code-division multiple access communication system, capable of improving the precision of the result of the multi-path searching almost without increasing the complexity of calculation, which overcomes the shortcoming of complicated realization of the early-late gate searching, and at the same time simplifies the complexity of Rake receiver.
A multi-path searching method provided in the present invention comprises the following steps:
calculating power delay profile of a received signal;
   selecting multiple peaks which have comparatively higher energy from said power delay profile ;
   setting threshold, which comprising: determining 2N threshold Th(n) according to the system requirement of the search precision, which are arranged by size, wherein N is a natural number and n is expressed as: n= -N,..., -1, 1,2,, N, and wherein the smaller the serial number is, the smaller the value of the threshold is; dividing a real number into 2N+1 real number sections by using the 2N thresholds, and the sequence number for the sections are : -N, -N+1, , 0, 1, , N; considering a peak locating in real number section 0 as the real multi-path delay position, for other real number section n, the position deviation corresponding to the real multi-path is DeltaOffset(n), and the energy deviation factor corresponding to the real peak is AlphaEnergy(n); determining the value of the position deviation and the energy deviation factor according to an ideal peak shape;
   performing threshold comparison and interpolation for said selected peaks to determine multi-path delay position and multi-path energy, wherein said step of performing threshold comparison and interpolation for the selected peaks comprising: calculating the ratio of the energy difference between the energy at a delay position before a selected peak and the energy at a delay position after the selected peak to the energy of the selected peak; comparing said ratio with said thresholds to determine the real number section where said ratio locates; determining the real multi-path delay position and the multi-path energy thereof corresponding to the selected peak according to the value of the determined real number section; repeating above steps to complete the threshold comparison and interpolation for all selected peaks;
   determining the multi-path delay according to the results of said interpolations.

The multi-path searching method, wherein the step of calculating the power delay profile further comprises: performing the matching correlation of a received signal with the local spreading code to obtain a correlation function; and calculating the module square of the above-mentioned correlation function to obtain the power delay profile.

The multi-path searching method, wherein the step of determining multi-path delay further comprises: selecting multiple paths which have comparatively higher energy from the multi-paths obtained by the step of threshold comparison and interpolation, and the corresponding delay is the multi-path delay.

Compared with multi-path searching methods according to the prior art, the multi-path searching method described in present invention can guarantee to improve multi-path search precision greatly almost without changing the complexity of calculating, wherein the search precision can reach 1/4 chip, 1/8 chip or even 1/16 chip. At the same time, the early-late gate tracking module is not needed in the present invention, i.e. complicated tracking algorithm is not needed also, which simplifies the complexity of the realization of the Rake receiver and the complexity of multi-path assignment management. The method according to the present invention is applicable for base stations and mobile stations in various code-division multiple access communicate system.

### BRIEF DESCRIPTION OF THE DRAWINGS

Fig. 1 is a schematic block diagram of a typical CDMA system;

Fig. 2 is a schematic block diagram of the CDMA system that applies the multi-path searching method according to the present invention;

Fig.3 is a flowchart of the multi-path searching method according to the present invention;

Fig. 4 is a graph illustrating the ideal shape of multi-path peak value;

Fig. 5 is a graph showing the relation between the deviation of real peak position to the searched peak position and the ratio of the energy difference between the energy of the sampling point earlier than the searched peak and the energy of the sampling point later than the searched peak to the energy of the searched peak;

Fig. 6 is a graph showing the relation between the energy deviation factor of the real peak value and the searched peak value and the ratio of the energy difference between the energy of the sampling point earlier than the searched peak and the energy of the sampling point later than the searched peak to the energy of the searched peak.

### DETAILED DESCRIPTION OF THE PREFERRED EMBODIMENT

[0100] Accompanying drawings and embodiments are combined to make further description hereinafter, according to which, the present invention can be easily realized for those skilled in the art.

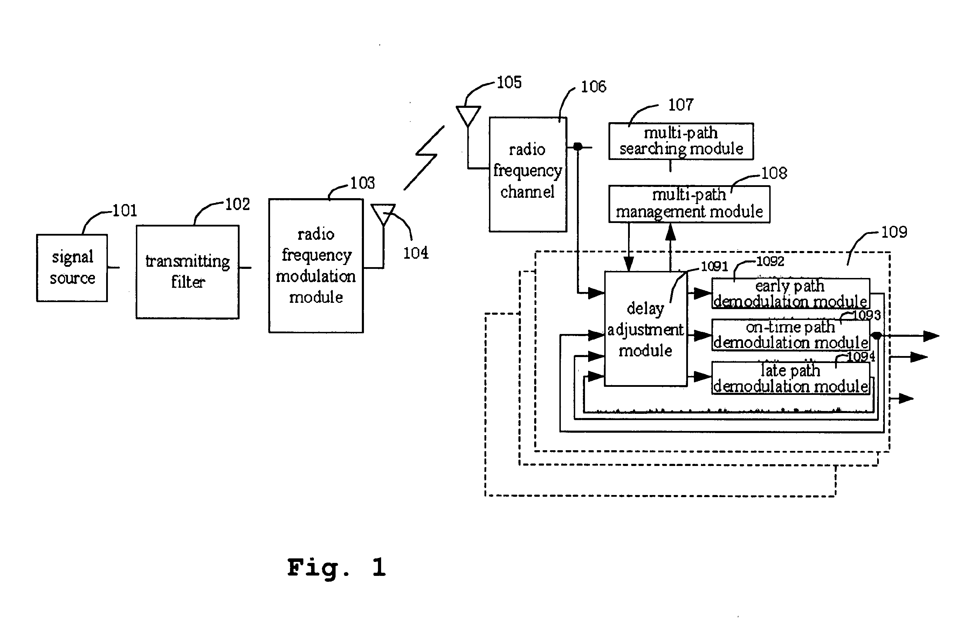

Fig.1 is a schematic block diagram of an existing typical CDMA system. Referring to fig.1, the transmitting apparatus includes signal source 101, transmitting filter 102, radio frequency (RF) modulating module and antenna 104. Before being modulated by the radio frequency, the signal first passes through a base-band transmitting filter 102, which is also called pulse shaping filter, which converts the spread spectrum digital signal to a signal that is fit for RF modulating Then the signal fit for RF modulating is modulated by the RF modulating module 103, which is then transmitted into the air by antenna 104. Generally, the characteristic of the transmitting filter 102 is stable, for example, for mobile stations in WCDMA system, the filter is a root raised cosine filter with its roll-off coefficient being 0.22. The receiving apparatus includes antenna 105, RF channel 106, multi-path searching module 107, multi-path management module 108 and Rake receiver 109. After the antenna 105 receives the signal, this signal passes through RF channel 106 and enters multi-path searching module 107, in which the process of multi-path search is carried out, signal output through another route from the RF channel 106 enters Rake receiver directly. The multi-path searching module applies existing multi-path searching method, such as early-late gate tracking method, and the multi-path delay is output to the multi-path management module 108, and then the output of the multi-path management module 108 enters the Rake receiver. Rake receiver includes multiple relatively independent receiving elements 109. Each receiving element 109 includes delay adjustment module 1091, early path demodulation module 1092, on-time path demodulation module 1093 and late path demodulation module 1094. The signals from multi-path management module 108 and RF channel 106 are received by the delay adjustment module 1091, which then adjusts the delay of the signal and transmits the outputs to the early path demodulation module 1092, on-time path demodulation module 1093 and late path demodulation module 1094. The demodulated results of these three early, on-time and late paths need to be fed back to the delay adjustment module 1091, which forms a feedback loop. At the same time, the delay adjustment module 1091 also needs to receive information from the multi-path management module108, and feeds back the information about the delay adjusting to the multi-path management module 108, which also forms a feedback loop. While feedback loop will make the multi-path searching method complex.

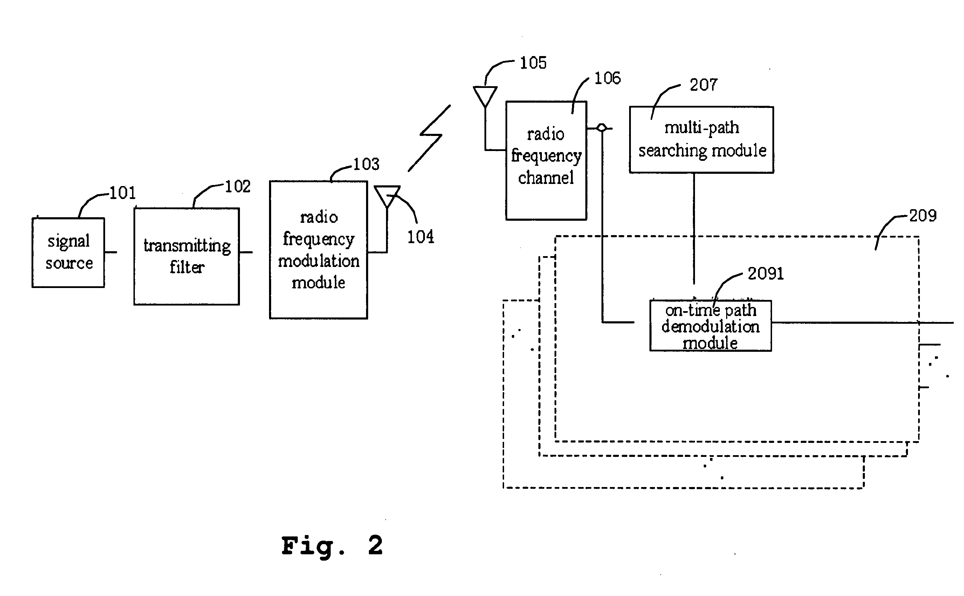

Fig. 2 is the schematic block diagram of the CDMA system that applies the multi-path searching method according to the present invention. Same as Fig.1, the transmitting apparatus includes signal source 101, transmitting filter 102, RF modulator module 103 and antenna 104. The receiving apparatus includes antenna 105, RF channel 106, multi-path searching module 207 and Rake receiver. After the antenna 105 receives the signal, this signal passes RF channel 106 and enters multi-path searching module 207, multi-path searching module 207 applies the multi-path searching method according to the present invention to carry out multi-path search. And the searched multi-path delay is output to the Rake receiver. Signal output through another route from the RF channel 106 enters Rake receiver directly. Rake receiver includes multiple relatively independent receiving elements 209. Wherein, each receiving element 209 only includes on-time path demodulation module 2091. Compared with Fig.1, the structure of the Rake receiving element has been simplified greatly, the delay adjustment module, the early path demodulation module as well as the late path demodulation module have been omitted, and the on-time path demodulation module 2091 is totally the same as the original on-time path demodulation module 1091. With the present invention, a complex multi-path management module is also not needed in the receiving system. Compared with Fig.1, there is no feedback loop in the receiving system, which simplify the system greatly.

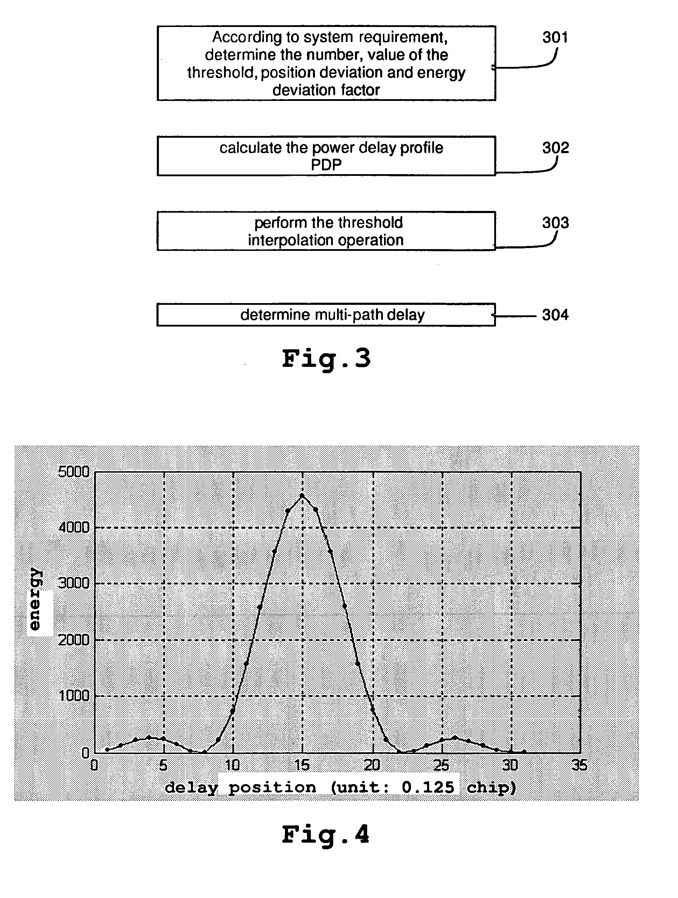

The kernel idea of the multi-path searching method of the present invention comprises: calculating the power delay profile PDP without changing the precision of the multi-path searching correlative integral, then selecting peak data of PDP with comparatively higher energy to perform interpolation based on the threshold decision, which specifically, i.e. calculating the ratio of the energy difference between the energy of the sampling point earlier than the searched peak and the energy of the sampling point later than the searched peak to the energy of the peak, which is then compared with a predetermined threshold to calculate more accurate multi-path delay position and energy. The peak herein and hereinafter is defined to be the position, the energy of which is higher than the energy of the positions on both sides thereof. The flowchart of the present invention is shown as Fig.3.

The method of the present invention is an interpolation method based on threshold decision, so it is necessary to set the threshold. The setting of the threshold can be completed during the period of system configuration, as shown in block 301 of Fig. 3. The number and value of the thresholds, the corresponding delay position deviation and energy deviation thereof can be determined according to the search precision requirement of the system. According to the requirement of search precision, 2N thresholds Th(n) are determined which are arranged by size, wherein n=±1, ±2,...±N, wherein N is a natural number, to make a easier description, the number zero is excluded. The smaller the serial number is, the smaller the corresponding threshold value is, i.e. the ranking order of the threshold is Th (-N), Th (-N+1), ....., Th (-1), Th (+1), ......, Th (N) . For instance, if the system needs to interpolate the search precision from 1/2 chip to 1/8 chip, at least four thresholds are needed, so here N is equal to 2. If system needs to interpolate the search precision from 1/2 chip to 1/4 chip, then two thresholds are needed, so here N is equal to 1. 2N thresholds divides the real number into 2N+1 real number sections, with the sequence number for which is defined as following: -N, -N+1, ..., 0, 1, ..., N. If the calculated ratio R obtained in current peak threshold interpolation locates in the real number section between Th (-1) and Th (1), that is, it locates in the NO. 0 real number section, then the current peak position can be considered to be the real multi-path delay position and the energy of the current peak is the real multi-path energy. For other real number section, if the section number is n, then the position deviation corresponding to the real multi-path position isDeltaOffset (n), and the energy deviation factor corresponding to the real peak is AlphaEnergy (n), wherein n=±1,±2,..., ±N, n represents the section number of the real number. Generally, the unit of the delay position is 1/2 chip. For example, during the operation of the current peak threshold interpolation, the calculated ratio R locates in the section between threshold Th (1) and Th (2), i.e.real number section 1, then the real peak position is obtained by adding up the current peak position and DeltaOffset (1), the real peak energy is obtained by multiplying the current peak energy by AlphaEnergy (1). Then, the position deviation DeltaOffset (n) and the energy deviation factor AlphaEnergy (n) can be determined according to the ideal shape of peak, wherein the energy deviation factor AlphaEnergy(n) is defined to be the ratio of the real peak energy to the searched peak energy. For example, in the above-mentioned embodiment, which has 4 thresholds, the corresponding position deviations are DeltaOffset(-2)=-0.25 chip, DeltaOffset(-1)=-0.125 chip, DeltaOffset(1)= +0.125chip, DeltaOffset(2)=+0.25 chip. While in the embodiment which has 2 thresholds, the corresponding position deviations are DeltaOffset (-1)=-0.25 chip, DeltaOffset(1)=+0.25 chip.

The specific multi-path searching method based on the threshold interpolation is carried out during the period of system's operation. First, the power delay profile PDP is calculated (as shown in block 302), which is the basic step for multi-path searching. There are many methods to calculate the power delay profile according to the prior art, but the integral length adopted may be of some difference, which has little effect on the method of the present invention. In the present invention, the correlation function is obtained by matching correlating the received signal with the local scrambled code and then the power at different delay can be obtained by calculating the module square of the correlation function, wherein the module square is the sum of the square of real part and the square of imaginary part.

Then, the threshold interpolation is carried out (as shown in block 303). First, multiple peaks with comparatively higher energy are selected according to the value of power delay profile PDP. Usually, according to an energy threshold which is defined or calculated by the system itself, the maximum number of selected multi-path the energy of which exceeds the energy threshold is less than or equal to Mpath, wherein the value of Mpath can be defined or calculated by each system, typically the value of Mpath is within the range from 4 to 16.Then the ratio of the energy difference between the energy of the delay position earlier than the searched peak and the energy of the delay position later than the selected peak to the energy of the selected peak is calculated. If the energy of selected peak is PDP (k), wherein k is the delay position, then the ratio R is obtained by the following formula: R =[PDP (k-1)-PDP(k+1)]/PDP(k). Comparing the ratio R with the defined threshold to determine the real number section where the ratio R locates in, then the real multi-path delay position and the corresponding multi-path energy thereof can be determined according to the value of that real number section. If the real number section where ratio R locates in is p, then the real multi-path delay position is the sum of the delay position of the selected peak and the position deviation DeltaOffset(p) of the real number section where the ration R is located, wherein the multi-path energy thereof is obtained by multiplying PDP(k) by AlphaEnergy (p) . All selected peaks are performed said threshold comparison and interpolation operation according to the above steps to obtain the corresponding real multi-path delay position and multi-path energy thereof.

Finally, the multi-path delay is determined (as shown in block 304). After the above-mentioned threshold interpolation operation, several real multi-path delay positions and multi-path energies are obtained. The energy of the real multi-path delay are compared and M multi-paths, the energy of which are comparatively higher, are selected from above mentioned real multi-paths. The specific value of Mcan be decided by each system independently, typically, M can be any value between 1 and 8. And the delay position tₘ which is corresponding to the energy is the multi-path delay, wherein m= 1, 2, ..., M.

By carrying out the above-mentioned steps, the entire process of multi-path search is completed; therefore, the multi-path delay is obtained.

Fig. 4 is a graph of the ideal shape of the multi-path peak value. This ideal peak is obtained by using 256 chips as the correlation integral length and 1/8 chip as the sampling precision, wherein the real peak position is 15 and the real multi-path energy is about 4600. If other integral length is adopted, the shape of the obtained peak will be of some difference. In the present embodiment, the coherent integral length with 256 chips will be described as example.

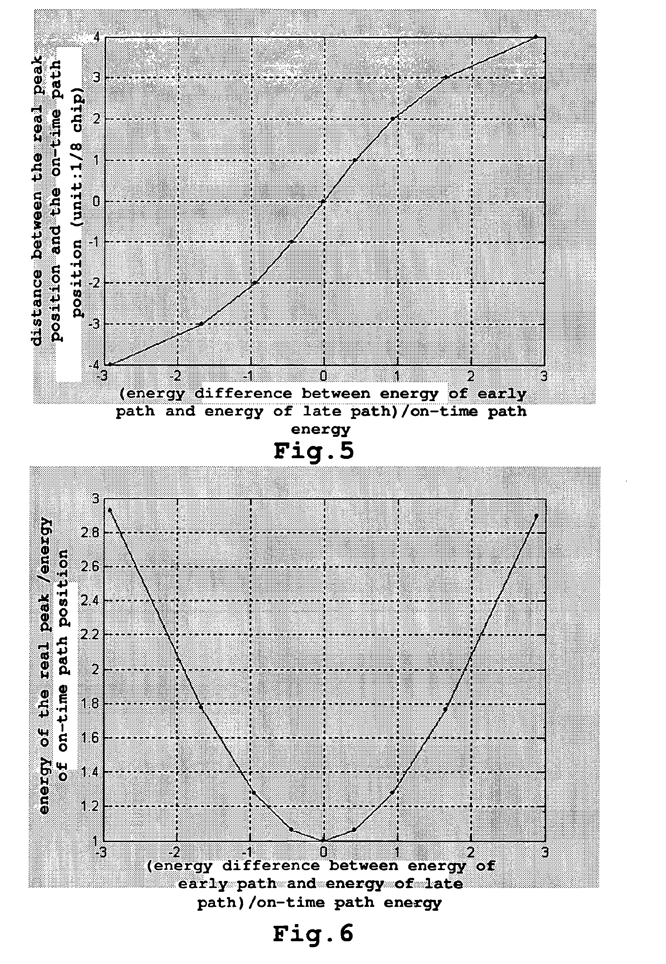

Fig. 5 is a graph showing the relation between the deviation of real peak position to the searched peak position and the ratio of the energy difference between the energy of the sampling point earlier than the searched peak and the energy of the sampling point later than the searched peak to the energy of the searched peak. Taking 256 chips integral length as example and assuming the multi-path search precision is 1/2 chip, then one point for every 4 adjacent points in the curve of Fig.4 should be selected as the sampling point position. If that, the real peak position 15 may not be selected, thus the searched peak may deviate from the real peak position. The position deviation and searched peak have following characteristics: the larger the absolute value of the position deviation is, the larger the absolute value of the ratio R of the energy difference between the early sampling point and the late sampling point around the searched peak to the energy of the searched peak is, and the symbol of the ratio, i.e. positive or negative, corresponds to the direction of the deviation. The specific relation is shown as the curve in Fig.5. For instance, if the position deviation is 0, then the ratio R equals to 0; if the position deviation is 1/8 chip, then the ratio R equals to 0.43; if the position deviation is -1/8 chip, then the ratio R equals to -0.43; if the position deviation is 1/4 chip, then the ratio R equals to 0.94.

If the search precision is required to be improved from 1/2 chip to 1/8 chip according to the requirement of the system, then four thresholds can be defined based on the curve in fig.5, which are -0.68, -0.21, 0.21 and 0.68 respectively, and the core-sponding four delay position deviations DeltaOffset thereof are -0.25, -0.125, 0.125 and 0.25.

Fig. 6 is a graph showing the relation between the energy deviation factor of the real peak energy to the searched peak energy and the ratio of the energy difference between the energy of the sampling point earlier than the searched peak and the energy of the sampling point later than the searched peak to the energy of the searched peak. Taking integral length of 256 chips as an example and assuming the multi-path search precision is 1/2 chip, and one point for every 4 adjacent points in the curve of Fig.4 should be selected as the sampling point position. If that, the real peak position 15 may not be selected, thus the energy of the searched peak may be lower than the energy of the real peak. And the relation between the size of the energy deviation and the searched peak is of following characteristic: the larger the absolute value of the energy deviation is, the larger the absolute value of the ratio Rof the energy difference between the energy of the early sampling point and that of the late sampling point around the searched peak to the energy of the searched peak is. The real relation is shown as the curve in Fig. 6. For instance, if the position deviation is 0, then the energy deviation equals to 0 and the ration R equals to 0 ; and if the position deviation is 1/8 chip, the energy of the real peak is 1.06 times of the energy of the searched peak, and the ratio R equals to 0.43; and if the position deviation is 1/4 chip, the energy of the real peak is 1.28 times of the searched peak energy, and the ratio R equals to 0.94.

Supposing that the search precision is required by the system to be improved from 1/2 chip to 1/8 chip, then four thresholds can be defined according to the curve in fig.5, which are -0.68, -0.21, 0.21 and 0.68 respectively, and the corresponding four delay position deviations DeltaOffset are -0.25, -0.125, 0.125 and 0.25, and the ratio of the real energy to the searched energy, i.e. AlphaEnergy is 1.28, 1.06, 1.06 and 1.28.

From the above-mentioned analysis, in the present embodiment, it is enough only to retain two datas of the energy deviation factor AlphaEnergy, and among the four datas of the delay position deviationDeltaOffset and threshold Th, if the sign is not considered, there are only two different datas, which facilitates the specific realization.

To sum up, compared with the CDMA receiving system according to the prior art, the CDMA receiving system applying the multi-path searching method according to the present invention can reduce the complexity of the receiving system greatly without reducing the performance of the system, which is easy to realize and is of obvious effect and is applicable for various code division multiple access communication system.

It should be understood that the above-described embodiments are used to explain but not to limit the present invention. Although the present invention has been explained in detail by referring to the embodiments, it should be apparent to those skilled in the art that various modifications and variations may be made in the present invention without departing from the scope of the invention. Thus, it is intended that the present invention cover the modifications and variations of this invention provided they come within the scope of the appended claims and their equivalents.

## Claims

1. A method of multi-path searching in code-division multiple access communication system comprising the steps of:
calculating power delay profile of a received signal;
selecting multiple peaks which have comparatively higher energy from said power delay profile;
**characterized in that** it further comprise:
setting threshold, which comprising: determining 2N threshold Th(n) according to the system requirement of the search precision, which are arranged by size, wherein N is a natural number and n is expressed as: n= -N,...,-1, 1,2,..., N, and wherein the smaller the serial number is, the smaller the value of the threshold is; dividing a real number into 2N+1 real number sections by using the 2N thresholds, and the sequence number for the sections are : -N, N+1,..., 0, 1,..., N; considering a peak locating in real number section 0 as the real multi-path delay position, for other real number section n, the position deviation corresponding to the real multi-path is DeltaOffset(n), and the energy deviation factor corresponding to the real peak is AlphaEnergy(n); determining the value of the position deviation and the energy deviation factor according to an ideal peak shape
performing threshold comparison and interpolation for said selected peaks to determine multi-path delay position and multi-path energy, wherein said step of performing threshold comparison and interpolation for the selected peaks further comprising: calculating the ratio of the energy difference between the energy at a delay position before a selected peak and the energy at a delay position after the selected peak and the energy of the selected peak; comparing said ratio with said thresholds to determine the real number section where said ratio locates; determining the real multi-path delay position and the multi-path energy thereof corresponding to the selected peak according to the value of the determined real number section; repeating above steps to complete the threshold comparison and interpolation for all selected peaks;
determining the multi-path delay according to the results of said interpolations.

2. The method according to claim 1, **characterized in that** said step of calculating power delay profile further comprises:
performing a matching correlation of said received signal with local spreading code to obtain a correlation function; and
calculating module square of said correlation function to obtain the power delay profile.

3. The method according to claim 1, **characterized in that** said step of selecting multiple peaks which have comparatively higher energy further comprises:
selecting no more than Mpath multi-paths according to an energy threshold prescribed or calculated by the system, wherein the energy of the selected multi-paths exceeds the energy threshold, wherein the maximum number of selected multi-path Mpath is prescribed or calculated by the system.

4. The method according to claim 3, **characterized in that** said Mpath is within the range between 4 and 16.

5. The method according to claim 1, **characterized in that** said step of determining the real multi-path delay position and the multi-path energy thereof corresponding to the selected peak further comprises :
adding the position deviation of the real number section where the ratio of the peak locates to the peak to get the real multi-path delay position;
multiplying the energy of the peak and the energy deviation factor of the real number section where the ratio of the peak locates to get the real multi-path energy.

6. The method according to claim 1, **characterized in that** said step of determining the multi-path delay according to the results of said interpolation further comprises:
comparing the energy of the real multi-paths obtained by carrying out the step of threshold comparison and interpolation;
selecting M multi-paths from said real multi-paths, the energy of which are comparatively higher, wherein M is determined by system;
obtaining multi-path delays which are the delays corresponding to the M multi-paths.

7. The method according to claim 6, **characterized in that** said M can be any integer from 1 to 8.

## Patentansprüche

1. Mehrwegsuchverfahren in einem Code Division Multiple Access (Codemultiplexverfahren) Kommunikationssystem, umfassend die folgenden Schritte:
Berechnen eines Energieverzögerungsprofils eines empfangenen Signals;
Auswählen mehrerer Spitzen, die eine vergleichsweise höhere Energie haben, aus dem Energieverzögerungsprofil;
**dadurch gekennzeichnet, dass** es des Weiteren Folgendes umfasst:
Einstellen eines Schwellenwertes, umfassend: Bestimmen von 2N Schwellenwerten Th(n) entsprechend den Systemanforderungen der Suchpräzision, die nach der Größe angeordnet sind, wobei N eine natürliche Zahl ist und n ausgedrückt ist als n = -N,...,-1, 1, 2, ..., N, und wobei der Wert des Schwellenwertes umso kleiner ist, je kleiner die serielle Zahl ist;
Dividieren einer reellen Zahl in 2N+1 Realteile unter Verwendung der 2N Schwellenwerte, wobei die Sequenznummern für die Teile wie folgt sind: -N, -N+1,..., 0, 1, ..., N;
Berücksichtigen einer Spitze, die sich in dem Realteil 0 befindet, als reelle Wehrwegverzögerungsposition, wobei für andere Realteile n die Positionsabweichung, die dem reellen Mehrweg entspricht, DeltaOffset(n) ist, und der Energieabweichungsfaktor, der der reellen Spitze entspricht, AlphaEnergy(n) ist;
Bestimmen des Wertes der Positionsabweichung und des Energieabweichungsfaktors entsprechend einer idealen Spitzenform
Durchführen eines Vergleichs und einer Interpolation des Schwellenwertes für die gewählten Spitzen zur Bestimmung einer Mehrwegverzögerungsposition und Mehrwegenergie, wobei der Schritt zur Durchführung des Vergleichs und der Interpolation des Schwellenwertes für die gewählten Spitzen des Weiteren Folgendes umfasst:
Berechnen des Verhältnisses der Energiedifferenz zwischen der Energie an einer Verzögerungsposition vor einer gewählten Spitze und der Energie an einer Verzögerungsposition nach der gewählten Spitze und der Energie der gewählten Spitze;
Vergleichen des Verhältnisses mit den Schwellenwerten zur Bestimmung des Realteils, wo sich das Verhältnis befindet;
Bestimmen der Mehrwegverzögerungsposition und deren Mehrwegenergie entsprechend der gewählten Spitze gemäß dem Wert des bestimmten Realteils;
Wiederholen der oben genannten Schritte zur Vollendung des Vergleichs und der Interpolation des Schwellenwertes für alle gewählten Spitzen;
Bestimmen der Mehrwegverzögerung entsprechend den Ergebnissen der Interpolationen.

2. Verfahren nach Anspruch 1, **dadurch gekennzeichnet, dass** der Schritt zum Berechnen des Energieverzögerungsprofils des Weiteren umfasst:
Durchführen einer Übereinstimmungskorrelation des empfangenen Signals mit einem lokalen Spreizfaktor zum Ermitteln einer Korrelationsfunktion; und
Berechnen eines Moduls im Quadrat der Korrelationsfunktion zum Erhalten des Energieverzögerungsprofils.

3. Verfahren nach Anspruch 1, **dadurch gekennzeichnet, dass** der Schritt zum Auswählen mehrfacher Spitzen, die vergleichsweise eine höhere Energie haben, des Weiteren Folgendes umfasst:
Auswählen von nicht mehr als Mpath Mehrwegen entsprechend einem Energieschwellenwert, der von dem System vorgeschrieben oder berechnet wird, wobei die Energie der gewählten Mehrwege den Energieschwellenwert überschreitet, wobei die maximale Anzahl gewählter Mehrwege Mpath von dem System vorgeschrieben oder berechnet ist.

4. Verfahren nach Anspruch 3, **dadurch gekennzeichnet, dass** der Mpath innerhalb des Bereichs von 4 bis 16 liegt.

5. Verfahren nach Anspruch 1, **dadurch gekennzeichnet, dass** der Schritt zum Bestimmen der reellen Mehrwegverzögerungsposition und deren Mehrwegenergie entsprechend der gewählten Spitze des Weiteren umfasst:
Addieren der Positionsabweichung des Realteils, wo sich das Verhältnis der Spitze befindet, zu der Spitze, um die reelle Mehrwegverzögerungsposition zu ermitteln;
Multiplizieren der Energie der Spitze und des Energieabweichungsfaktors des Realteils, wo sich das Verhältnis der Spitze befindet, um die reelle Mehrwegenergie zu ermitteln.

6. Verfahren nach Anspruch 1, **dadurch gekennzeichnet, dass** der Schritt zum Bestimmen der Mehrwegverzögerung entsprechend den Ergebnissen der Interpolation des Weiteren Folgendes umfasst:
Vergleichen der Energie der reellen Mehrwege, die durch Durchführen des Schrittes des Vergleichs und der Interpolation des Schwellenwertes erhalten wurde;
Auswählen von M Mehrwegen aus den reellen Mehrwegen, deren Energie vergleichsweise höher ist, wobei M von dem System bestimmt wird;
Erhalten von Mehrwegverzögerungen, die Verzögerungen sind, die den M Mehrwegen entsprechen.

7. Verfahren nach Anspruch 6, **dadurch gekennzeichnet, dass** M eine ganze Zahl von 1 bis 8 sein kann.

## Revendications

1. Procédé de recherche multi-trajets dans un système de communication à accès multiple par répartition de code, comprenant les étapes consistant à :
calculer le profil de retard d'énergie d'un signal reçu ;
sélectionner des pics multiples qui ont une énergie comparativement plus élevée à partir dudit profil de retard d'énergie ;
**caractérisé en ce que** il comprend en outre :
le réglage d'un seuil, qui comprend les étapes consistant à : déterminer un seuil 2N th(n) selon l'exigence du système en terme de précision de recherche, qui sont rangés par taille, dans lequel N est un nombre naturel et n est exprimé comme : n = - N,...,-1, 1, 2, ..., N et dans lequel plus le numéro de série est petit, plus la valeur du seuil est petite ;
diviser un nombre réel en 2N+1 sections de nombre réel en utilisant les seuils 2N, et les numéros de séquence des sections sont : -N, -N+1,..., 0, 1, ..., N;
considérer un pic se situant dans la section de nombre réel 0 comme la position réelle de retard multi-trajets, pour une autre section de numéro réel n, la déviation de position correspondant au multi-trajets réel est DécalageDelta(n) et le facteur de déviation d'énergie correspondant au pic réel est EnergieAlpha(n) ;
déterminer la valeur de la déviation de position et le facteur de déviation d'énergie selon une forme de pic idéale,
effectuer une comparaison et une interpolation de seuil pour lesdits pics sélectionnés afin de déterminer une position de retard multi-trajets et une énergie multi-trajets, dans lequel ladite étape consistant à effectuer la comparaison et l'interpolation de seuil pour les pics sélectionnés comprend en outre les étapes consistant à :
calculer le rapport de la différence d'énergie entre l'énergie à une position de retard avant un pic sélectionné et l'énergie à une position de retard après le pic sélectionné et l'énergie du pic sélectionné ;
comparer ledit rapport avec lesdits seuils afin de déterminer la section de nombre réel où se situe ledit rapport ;
déterminer la position réelle de retard multi-trajets et l'énergie multi-trajets de celle-ci correspondant au pic sélectionné selon la valeur de la section de nombre réelle déterminée ;
répéter les étapes ci-dessus afin de parachever la comparaison et l'interpolation de seuil pour tous les pics sélectionnés ;
déterminer le retard multi-trajets selon les résultats de ladite interpolation.

2. Procédé selon la revendication 1, **caractérisé en ce que** ladite étape de calcul du profil de retard d'énergie comprend en outre les étapes consistant à :
effectuer une corrélation concordante dudit signal reçu avec un code d'étalement local afin d'obtenir une fonction de corrélation ; et
calculer un carré de module de ladite fonction de corrélation afin d'obtenir le profil de retard d'énergie.

3. Procédé selon la revendication 1, **caractérisé en ce que** ladite étape de sélection des pics multiples qui ont une énergie comparativement plus élevée comprend en outre l'étape consistant à :
sélectionner pas plus de Mpath multi-trajets selon un seuil d'énergie prescrit ou calculé par le système, dans lequel l'énergie des multi-trajets sélectionnés excède le seuil d'énergie, dans lequel le nombre maximal de multi-trajets Mpath sélectionnés est prescrit ou calculé par le système.

4. Procédé selon la revendication 3, **caractérisé en ce que** ledit Mpath est compris dans une plage de 4 à 16.

5. Procédé selon la revendication 1, **caractérisé en ce que** ladite étape de détermination de la position réelle de retard multi-trajets et l'énergie multi-trajets de celle-ci correspondant au pic sélectionné comprend en outre les étapes consistant à :
ajouter la déviation de position de la section de nombre réel où le rapport du pic se situe vers le pic afin d'obtenir la position réelle de retard multi-trajets ;
multiplier l'énergie du pic et le facteur de déviation d'énergie de la section de nombre réel où le rapport du pic se situe afin d'obtenir l'énergie multi-trajets réelle.

6. Procédé selon la revendication 1, **caractérisé en ce que** ladite étape de détermination de retard multi-trajets selon les résultats de ladite interpolation comprend en outre les étapes consistant à :
comparer l'énergie des multi-trajets réels obtenue en exécutant l'étape de comparaison et interpolation de seuil ;
sélectionner M multi-trajets parmi lesdits multi-trajets réels, dont l'énergie est comparativement plus élevée, dans lequel M est déterminé par le système ;
obtenir des retards multi-trajets qui sont les retards correspondant aux M multi-trajets.

7. Procédé selon la revendication 6, **caractérisé en ce que** ledit M peut être n'importe quel entier de 1 à 8.
